# EUROPÄISCHE PATENTSCHRIFT

(11) **EP 2 361 751 B1**
(45) Veröffentlichungstag und Bekanntmachung des Hinweises auf die Patenterteilung: **19.12.2012**
(21) Anmeldenummer: 11155584.3
(22) Anmeldetag: 23.02.2011
(51) Int. Cl.: B29C 67/00, B22F 3/105

(54) **Verfahren und Vorrichtung zum Herstellen eines dreidimensionalen Objekts, das sich insbesondere für den Einsatz in der Mikrotechnik eignet**
Method and device for producing a three dimensional object, particularly suitable for use in microtechnology
Procédé et dispositif de fabrication d'un objet tridimensionnel, notamment approprié à l'utilisation dans la microtechnique

(30) Priorität: 23.02.2010 DE 102010008960
(43) Veröffentlichungstag der Anmeldung: 31.08.2011
(73) Patentinhaber: EOS GmbH Electro Optical Systems, 82152 Krailling (DE)
(72) Erfinder: Oberhofer, Johann, 82131, Stockdorf (DE); Göbner, Joachim, 07616, Bürgel (DE); Büse, Hans-Ulrich, 33106, Paderborn (DE)
(74) Vertreter: Prüfer & Partner GbR European Patent Attorneys

(56) Entgegenhaltungen:
- WO-A1-2007/147221
- US-A- 5 597 589
- US-A- 5 753 171
- US-A1- 2003 074 096
- P. REGENFUSS, L. HARTWIG, S. KLÖTZER, R. EBERT, TH. BRABANT, T. PETSCH, H. EXNER: "Industrial freeform generation of microtools by laser micro sintering", RAPID PROTOTYPING JOURNAL, Bd. 11, Nr. 1 1995, Seiten 1-15, XP002638095, Gefunden im Internet: URL:http://www.emeraldinsight.com/journals .htm?issn=1355-2546&volume=11&issue=1&arti cleid=1464529&show=html [gefunden am 2011-05-19]

## Beschreibung

Die vorliegende Erfindung bezieht sich auf ein Verfahren und auf eine Vorrichtung zum Herstellen eines dreidimensionalen Objekts. Das hergestellte Objekt eignet sich insbesondere für den Einsatz in der Mikrotechnik.

EP-0 758 952 B1 beschreibt ein bekanntes Verfahren und eine bekannte Vorrichtung zum Herstellen eines dreidimensionalen Objekts, bei dem das Objekt durch aufeinanderfolgendes Verfestigen einzelner Schichten aus flüssigem oder pulverförmigem, verfestigbarem Baumaterial durch Einwirkung einer elektromagnetischen Strahlung erzeugt wird. Die elektromagnetische Strahlung ist hierbei vorzugsweise eine gepulste Laserstrahlung. DE 100 28 063 A1 und DE 100 65 960 A1 zeigen eine ähnliche Vorrichtung, wobei die elektromagnetische Strahlung eine gepulste Laserstrahlung ist.

DE 102 58 934 A1 beschreibt ein Verfahren und eine Vorrichtung zum selektiven Verbinden von Körpern mit Trägern durch Laserstrahlen. Es wird gepulste Laserstrahlung eingesetzt und der Strahlungsdruck wird zum Verdichten und zum zusätzlichen Erwärmen der Pulverschicht verwendet. Es ist beschrieben, daß das Verfahren zur Erzeugung von Mikrostrukturen einsetzbar ist. Die durch das bekannte Verfahren erzeugbaren Teile, insbesondere Metallteile, besitzen jedoch ein Restporosität, weshalb sie für bestimmte Anwendungen in der Mikrotechnik nicht geeignet sind. p.

US 2003/0074096 A1 offenbart ein gattungsgemäßes Verfahren gemäß dem Oberbegriff von Anspruch 1 und eine Vorrichtung gemäß dem Obergriff des Anspruchs 14. Hierbei wird eine Vorrichtung eingesetzt, die mit einem CO2-Laser und einem kontinuierlich und gepulst betreibbaren Nd:YAG-Laser bestückt ist. Beim Lasersintern wird der Nd:YAG-Laser verwendet und ausschließlich kontinuierlich betrieben. Der CO2-Laser und der Nd:YAG-Laser dürfen innerhalb einer Schicht nicht kombiniert werden, sondern müssen in Abhängigkeit des verwendeten Materials streng voneinander getrennt verwendet werden (z.B. CO2-Laser für Polymere und Keramik und Nd:YAG-Laser für Metalle).

US 5753171 offenbart ein Verfahren gemäß dem Obergriff des Anspruchs 1 und eine Vorrichtung gemäß dem Obergriff des Anspruchs 14.

Ein weiteres Verfahren ist offenbart in P. Regenfuss, L. Hartwig, S. Klötzer, R. Ebert, Th. Brabant, T. Petsch, H. Exner: "Industrial freeform generation of microtools by laser micro sintering", Rapid prototyping journal, Bd. 11, Nr. 1, Seiten 1-15, ISSN: 1355-2546, DOI: 10.1108/13552540510573356.

Es ist die Aufgabe der vorliegenden Erfindung, ein Verfahren und eine Vorrichtung zum Herstellen eines dreidimensionalen Objekts vorzusehen, durch das bzw. durch die Bauteile hergestellt werden können, die in der Mikrotechnik einsetzbar sind.

Diese Aufgabe wird durch das Verfahren zum Herstellen eines dreidimensionalen Objekts mit den Merkmalen des Anspruchs 1 und durch die Vorrichtung zum Herstellen eines dreidimensionalen Objekts mit den Merkmalen des Anspruchs 14 gelöst. Vorteilhafte Weiterbildungen sind Gegenstand der Unteransprüche.

Das erfindungsgemäße Verfahren und die entsprechende Vorrichtung sind in vorteilhafter Weise für das Mikro-Lasersintern (Mikro-LS) geeignet, bei dem dreidimensionale Objekte mit einer Auflösung im Mikrometerbereich aufgebaut werden.

Bei dem erfindungsgemäßen Verfahren und der entsprechenden Vorrichtung können in vorteilhafter Weise dreidimensionale Bauteile mit erhöhter Dichte vorgesehen werden, wodurch die mechanischen Eigenschaften des Bauteils entsprechend verbessert werden.

Weitere Merkmale und Zweckmäßigkeiten der Erfindung ergeben sich aus der Beschreibung von Ausführungsbeispielen anhand der beigefügten Zeichnung. Es zeigt:

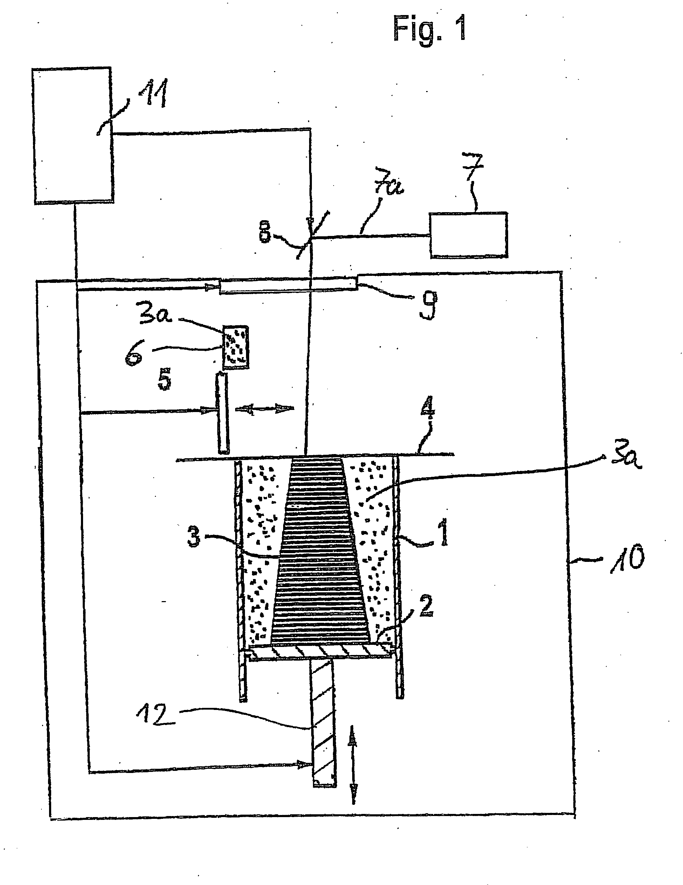

Fig. 1 eine schematische Ansicht einer Vorrichtung zum Herstellen eines dreidimensionalen Objekts gemäß der vorliegenden Erfindung, die im Ausführungsbeispiel als Lasersintervorrichtung ausgebildet ist.

Die Lasersintervorrichtung weist einen nach oben hin offenen Rahmen 1 mit einer darin befindlichen, in vertikaler Richtung bewegbaren Plattform 2 auf, die das herzustellende dreidimensionale Objekt 3 trägt. Der Rahmen 1 und die Plattform 2 definieren im Inneren einen Bauraum. Die Plattform 2 ist mit einer Hubmechanik 12 in Verbindung, die sie in vertikaler Richtung so verfährt, dass die jeweils zu verfestigende Schicht des Objekts 3 in einer Arbeitsebene 4 liegt.

Des Weiteren ist ein Beschichter 5 zum Aufbringen einer Schicht eines pulverförmigen Aufbaumaterials 3a vorgesehen. Als Aufbaumaterial 3a können alle lasersinterbaren Pulver verwendet werden, also Polymere wie z.B. Polyamide, Polystyrole, Metalle, Keramiken, Verbundmaterialien und insbesondere Hochtemperatur-Kunststoffe wie z.B. PAEK (Polyaryletherketone). Als metallhaltiges Pulvermaterial kommen beliebige Metalle und deren Legierungen sowie Mischungen mit metallischen Komponenten oder mit nichtmetallischen Komponenten in Frage. Dem Rahmen 1 wird zunächst das Aufbaumaterial 3a aus einem Vorratsbehälter 6 zugeführt. Der Beschichter 5 wird danach in einer vorbestimmten Höhe in der Arbeitsebene 4 verfahren, so dass die Schicht des pulverförmigen Aufbaumaterials 3a mit einer definierten Höhe über der zuletzt verfestigten Schicht liegt. Die Vorrichtung weist des Weiteren einen Laser 7 auf, der einen Laserstrahl 7a erzeugt, der durch eine Ablenkeinrichtung 8 auf beliebige Punkte in der Arbeitsebene 4 fokussiert wird. Dadurch kann der Laserstrahl 7a das pulverförmige Aufbaumaterial 3a an den Stellen selektiv verfestigen, die dem Querschnitt des herzustellenden Objekts 3 entsprechenden. Als Laser können alle Laser verwendet werden, die für das Lasersintern bzw. Laserschmelzen jeweils für das entsprechende Baumaterial geeignet sind, z.B. CO₂ Laser, Festkörperlaser, etc.

Mit dem Bezugszeichen 10 ist eine Prozesskammer bezeichnet, in der der Rahmen 1, die Plattform 2, die Hubmechanik 12 und der Beschichter 5 angeordnet werden können. Das Bezugszeichen 9 bezeichnet eine Öffnung in der Prozesskammer 10 zur Einleitung des Laserstrahls 7a. Vorzugsweise wird ein Schutzgas in die Prozesskammer 10 eingeführt. Es ist ferner eine Steuereinheit 11 vorgesehen, über die die Vorrichtung in koordinierter Weise zum Durchführen des Bauprozesses gesteuert wird.

Vorzugsweise ist die Lasersintervorrichtung eine Mikro-Lasersintervorrichtung. Das Mikro-Lasersintern ist dadurch gekennzeichnet, daß sehr feine Pulver verwendet werden und sehr dünne Schichten aufgetragen werden. Damit lässt sich eine Auflösung im Bereich von einigen 10 µm oder weniger erreichen. Die verwendeten Pulver haben Korngrößen im Bereich von etwa 1 nm bis etwa 100 nm. Die Korngröße wird mit Laserbeugung gem. DIN ISO 13320-1 gemessen. Die Schichtdicke der aufgetragenen Pulverschichten beträgt etwa 1 µm bis etwa 100 µm. Allgemein ist beim Mikro-Lasersintern der Korndurchmesser und die Schichtdicke so groß, daß die Oberflächenkräfte höher als die Gravitationskräfte sind. Der verwendete Strahldurchmesser liegt zwischen etwa 1 µm bis etwa 20 µm. Als Laser wird vorzugsweise ein Faserlaser oder ein YAG-Laser eingesetzt. Als Pulver der bevorzugten Ausführung können alle Pulver aus Materialien verwendet werden, die in der Mikrotechnik Einsatz finden, insbesondere jedoch Metallpulver.

Bei dem Betrieb der Vorrichtung wird in einem ersten Schritt die Plattform 2 durch die Hubmechanik 12 soweit verfahren, bis ihre obere Seite um eine Schichtdicke unterhalb der Arbeitsebene 4 liegt. Dann wird mittels des Vorratsbehälters 6 und des Beschichters 5 eine erste Schicht des Baumaterials 3a auf die Plattform 2 aufgebracht und geglättet. Daraufhin steuert die Steuereinheit 11 die Ablenkeinrichtung 8 derart, dass der abgelenkte Laserstrahl 7a selektiv an den Stellen der Schicht des Baumateriales 3a auftrifft, die verfestigt werden sollen. Dadurch wird an diesen Stellen das Baumaterial 3a verfestigt bzw. gesintert, so dass hier das dreidimensionale Objekt 3 entsteht.

In einem nächsten Schritt wird die Plattform 2 durch die Hubmechanik 12 um die Dicke der nächsten Schicht abgesenkt. Durch den Vorratsbehälter 6 und den Beschichter 5 wird eine zweite Baumaterialschicht aufgetragen, geglättet und mittels des Laserstahls 7a selektiv verfestigt. Diese Schritte werden so oft durchgeführt, bis das gewünschte Objekt 3 hergestellt ist.

Bei einem Verfahren gemäß einem Vergleichsbeispiel wird der Laser 7 durch die Steuereinheit 11 in zwei verschiedenen Betriebsmodi angesteuert. Der erste Betriebsmodus bewirkt eine erste gepulste Strahlung 7a des Lasers 7 mit einer ersten Frequenz. Der zweite Betriebsmodus bewirkt eine zweite Strahlung, die eine gepulste Strahlung mit einer höheren Frequenz als die erste gepulste Strahlung oder eine kontinuierliche Strahlung ist. Die Frequenz der ersten gepulsten Strahlung beträgt beispielsweise zwischen 60 kHz und 450 kHz vorzugsweise etwa 60 kHz bis 300 kHz. Die Frequenz der zweiten gepulsten Strahlung beträgt beispielsweise zwischen 200 und 450 kHz

Die gepulste Laserstrahlung 7a kann durch gepulste Anregung oder auch durch Maßnahmen im Laser 7 selbst (Güteschaltung oder Modenkopplung) erzeugt werden. Bei der gepulsten Laserstrahlung wird der Laserstrahl 7a nicht kontinuierlich emittiert wie bei einem CW-Laser (Continuous Wave Laser bzw. Dauerstrichlaser), sondern er wird gepulst, d.h. in zeitlich begrenzten Pulsen ausgestrahlt.

Gemäß einem Ausführungsbeispiel der vorliegenden Erfindung wird ein Laser 7 verwendet, der vorzugsweise sowohl eine gepulste Strahlung 7a als auch eine kontinuierliche Strahlung 7a ausstrahlen kann. Hierbei wird ein CW-Laser gepulst betrieben, indem die "Pumpleistung" in kurzen Zyklen ein- und ausgeschaltet wird. Kohlendioxidlaser können so bis über 1 kHz gepulst betrieben werden. Eine weitere Möglichkeit ist eine Generierung der Pulse durch eine Kombination eines CW-Lasers und eines Modulators wie z. B. eines einfachen Choppers.

Nachdem der Beschichter 5 die Schicht des Baumaterials 3a aufgetragen und geglättet hat, erfolgt die Bestrahlung der Schicht des Baumaterials 3a in zwei Schritten. Zuerst wird eine gepulste elektromagnetische Strahlung 7a auf einen ersten Bereich einer Schicht des Baumaterials 3a ausgestrahlt, und anschließend wird eine kontinuierliche elektromagnetische Strahlung 7a auf einen zweiten Bereich der Schicht des Baumaterials 3a ausgestrahlt.

Vorzugsweise überlappen sich der erste und der zweite Bereich der Schicht zumindest teilweise. Die Bereiche können sich auch ganz überlappen und können Teilbereiche einer Schicht oder die ganze Schicht darstellen. Weiter bevorzugt wird zwischen dem Ausstrahlen der gepulsten elektromagnetischen Strahlung 7a auf das Baumaterial 3a und dem Ausstrahlen der kontinuierlichen elektromagnetischen Strahlung 7a auf das Baumaterial 3a eine Zeit vorgesehen, in der sich das mit der gepulsten elektromagnetischen Strahlung 7a bestrahlte Baumaterial 3a verfestigt.

Die Kombination der gepulsten Strahlung und der kontinuierlichen Strahlung 7a hat eine synergetische Wirkung. Einerseits sorgt die gepulste Strahlung 7a für das Aufbrechen der Oberflächenspannungen der Pulverpartikel im Baumaterial 31 und das Verbinden der Pulverkörner. Andererseits sorgt die kontinuierliche Strahlung 7a für eine weitere Verdichtung von porösen Sinterstrukturen im Baumaterial 3a, das bereits mit der gepulsten elektromagnetischen Strahlung 7a bestrahlt wurde. Mit der zweiten Bestrahlung wird verhindert, daß sich Schmelzperlen bilden.

In einer Abwandlung kann im zeitlichen Wechsel ein erster Bereich einer Schicht mit der gepulsten Strahlung bestrahlt werden, und anschließend kann ein zweiter Bereich der Schicht, der den ersten Bereich nicht überlappt, mit der kontinuierlichen Strahlung bestrahlt werden. Es kann eine Mehrzahl von ersten und zweiten Bereichen vorgesehen sein.

Durch die Aufteilung der Schichten in erste und zweite Bereiche, die gepulst bzw. kontinuierlich bestrahlt werden und die sich ganz, teilweise oder überhaupt nicht überlappen, kann in vorteilhafter Weise der Energie- bzw. Wärmeeintrag in die Schicht gesteuert und vereinheitlicht werden, so dass Spannungen in der Schicht reduziert werden können.

Das erfindungsgemäße Verfahren und die entsprechende Vorrichtung sind in vorteilhafter Weise für das Mikro-Lasersintern (Mikro-LS) geeignet, bei dem dreidimensionale Objekte mit Details im Mikrometerbereich aufgebaut werden. Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs fallen.

Die vorliegende Erfindung ist nicht nur für das Lasersinterverfahren geeignet, sondern auch für Laserschmelzverfahren und Stereolithographieverfahren.

Anstelle der Laserstrahlung kann eine Teilchenstrahlung wie z.B. eine Elektronenstrahlung als elektromagnetische Strahlung verwendet werden.

Anstelle eines einzigen Lasers können auch zwei Laserlichtquellen verwendet werden.

## Patentansprüche

1. Verfahren zum Herstellen eines dreidimensionalen Objekts (3), bei dem das Objekt (3) durch aufeinander folgendes Verfestigen einzelner Schichten aus flüssigem oder pulverförmigem, verfestigbarem Baumaterial (3a) durch Einwirkung einer elektromagnetischen Strahlung (7a) erzeugt wird,
**dadurch gekennzeichnet, dass**
innerhalb einer Schicht eine gepulste elektromagnetische Strahlung und eine kontinuierliche elektromagnetische Strahlung verwendet werden; und
ein Bereich einer Schicht, der mit der gepulsten elektromagnetischen Strahlungbestrahlt worden ist, anschließend noch mit der kontinuierlichen elektromagnetischen Strahlung bestrahlt wird.

2. Verfahren nach Anspruch 1, des Weiteren mit den Schritten
Ausstrahlen der gepulsten elektromagnetischen Strahlung (7a) auf einen ersten Bereich einer Schicht des Baumaterials (3a); und
Ausstrahlen der kontinuierlichen elektromagnetischen Strahlung (7a) auf einen zweiten Bereich der Schicht des Baumaterials (3a).

3. Verfahren gemäß Anspruch 1 oder 2,
wobei die gepulste elektromagnetische Strahlung (7a) eine gepulste Laserstrahlung ist.

4. Verfahren gemäß einem der vorherigen Ansprüche,
wobei die kontinuierliche elektromagnetische Strahlung (7a) eine kontinuierliche Laserstrahlung ist.

5. Verfahren gemäß einem der Ansprüche 2 bis 4,
wobei sich der erste Bereich und der zweite Bereich der Schicht zumindest teilweise überlappen.

6. Verfahren gemäß einem der Ansprüche 1 bis 5,
wobei die Pulsfrequenz der gepulsten Strahlung zwischen etwa 60 und etwa 450 kHz und vorzugsweise zwischen etwa 60 und etwa 300 kHz beträgt.

7. Verfahren gemäß einem der vorherigen Ansprüche,
wobei zwischen dem Ausstrahlen der gepulsten elektromagnetischen Strahlung (7a) auf das Baumaterial (3a) und dem Ausstrahlen der kontinuierlichen elektromagnetischen Strahlung (7a) eine Zeit vorgesehen wird, in der sich das mit der gepulsten elektromagnetischen Strahlung (7a) bestrahlte Baumaterial (3a) verfestigt.

8. Verfahren gemäß einem der Ansprüche 1 bis 7, wobei innerhalb einer Schicht örtlich und/oder zeitlich ein Wechsel zwischen der gepulsten und der kontinuierlichen Strahlung vorgenommen wird.

9. Lasersinter- oder Laserschmelzverfahren als das Verfahren gemäß einem der vorherigen Ansprüche.

10. Verfahren nach einem der Ansprüche 1 bis 9, wobei ein Pulver verwendet wird, das eine Korngröße zwischen etwa 1 nm und etwa 100 nm aufweist.

11. Verfahren nach einem der Ansprüche 1 bis 10, wobei die Schichtdicke, in der das Pulver aufgetragen wird zwischen etwa 1 µm bis etwa 100 µm liegt.

12. Verfahren nach einem der Ansprüche 1 bis 11, wobei der Strahldurchmesser zwischen 1 µm bis etwa 20 µm beträgt.

13. Verfahren nach einem der Ansprüche 1 bis 12, wobei die gepulste Laserstrahlung und die kontinuierliche Laserstrahlung durch einen einzigen kontinuierlicher Laser (7) erzeugt werden, der sowohl eine gepulste Laserstrahlung (7a) als auch eine kontinuierliche Laserstrahlung (7a) ausstrahlen kann, wobei die gepulste Laserstrahlung (7a) durch Ein- und Ausschalten einer Pumpleistung des Lasers (7) oder durch Kombinieren des Lasers (7) mit einem Modulator erzeugt wird.

14. Vorrichtung zum Herstellen eines dreidimensionalen Objekts (3),
gemäß einem Verfahren, bei dem das Objekt (3) durch aufeinander folgendes Verfestigen einzelmer Schichten aus flüssigem order pulverförmigem, verfestigbarem Baumaterial (3a) durch Einwirkung einer elektromagnetischen Strahung erzeugt wird,
**gekennzeichnet durch** eine Steuereinheit (11), die die Schritte des Verfahrens gemäß einem der vorherigen Ansprüche durchführt.

15. Vorrichtung gemäß Anspruch 14, die als Strahlungsquelle (7) einen einzigen Laser (7) aufweist, der sowohl eine gepulste Laserstrahlung (7a) als auch eine kontinuierliche Laserstrahlung (7a) ausstrahlen kann.

16. Vorrichtung gemäß Anspruch 14, die als Strahlungsquelle (7) einen ersten Laser, der eine gepulste Laserstrahlung ausstrahlt, und einen zweiten Laser aufweist, der eine kontinuierliche Laserstrahlung ausstrahlt.

## Claims

1. A method for manufacturing a three-dimensional object (3), wherein the object (3) is generated by successive solidifying of single layers of a liquid or powdery solidifiable building material (3a) by the action of electromagnetic radiation (7a), wherein, within a layer, a pulsed electromagnetic radiation and a continuous electromagnetic radiation are used; and one area of a layer which has been irradiated with the pulsed electromagnetic radiation is subsequently also irradiated with the continuous electromagnetic radiation.

2. The method of claim 1 further having the steps:
emitting the pulsed electromagnetic radiation (7a) onto a first area of a layer of the building material (3a); and
emitting the continuous electromagnetic radiation (7a) onto a second area of the layer of the building material (3a).

3. The method of claim 1 or 2, wherein the pulsed electromagnetic radiation (7a) is a pulsed laser radiation.

4. The method according to one of the preceding claims, wherein the continuous electromagnetic radiation (7a) is a continuous laser radiation.

5. The method of one of claims 2 to 4, wherein the first area and the second area of the layer at least partially overlap.

6. The method of one of claims 1 to 5, wherein the pulse frequency of the pulsed radiation is between approximately 60 and approximately 450 kHz and preferably between approximately 60 and approximately 300 kHz.

7. The method of one of the preceding claims, wherein between emitting of the pulsed electromagnetic radiation (7a) onto the building material (3a) and emitting of the continuous electromagnetic radiation (7a) a time period is provided, during which the building material (3a) irradiated with the pulsed electromagnetic radiation (7a) solidifies.

8. The method of one of claims 1 to 7, wherein within a layer locally and/or temporally an alternation between the pulsed and the continuous radiation is carried out.

9. A laser sintering or laser melting method being the method according to one of the preceding claims.

10. The method of one of claims 1 to 9, wherein a powder is used that has a grain size between approximately 1 nm and approximately 100 nm.

11. The method of one of claims 1 to 10, wherein the layer thickness, in which the powder is applied, is between approximately 1 µm to approximately 100 µm.

12. The method of one of claims 1 to 11, wherein the beam diameter is between 1 µm up to approximately 20 µm.

13. The method of one of claims 1 to 12, wherein the pulsed laser radiation and the continuous laser radiation are generated by a single continuous laser (7), which can emit both a pulsed laser radiation (7a) and a continuous laser radiation (7a), wherein the pulsed laser radiation (7a) is generated by switching on and off a pumping power of the laser (7) or by combining the laser (7) with a modulator.

14. A device for producing a three-dimensional object (3) by a method wherein the object (3) is generated by successive solidifying of single layers of a liquid or powdery solidifiable building material (3a) by the action of electromagnetic radiation, **characterized by** a control unit (11), which carries out the steps of the method of one of the preceding claims.

15. The device according to claim 14, comprising as the radiation source (7) a single laser (7) that can emit both a pulsed laser radiation (7a) and a continuous laser radiation (7a).

16. The device according to claim 14, comprising as the radiation source (7) a first laser that emits a pulsed laser radiation and a second laser that emits a continuous laser radiation.

## Revendications

1. Procédé pour fabriquer un objet tridimensionnel (3), selon lequel l'objet (3) est produit par durcissement successif de couches individuelles en un matériau de construction (3a) liquide ou poudreux, solidifiable sous l'effet d'un rayonnement électromagnétique (7a),
**caractérisé en ce que**
un rayonnement électromagnétique pulsé et un rayonnement électromagnétique continu sont utilisés à l'intérieur d'une couche ; et
une zone d'une couche qui a été irradiée avec le rayonnement électromagnétique pulsé est ensuite encore irradiée avec le rayonnement électromagnétique continu.

2. Procédé selon la revendication 1, comprenant en outre les étapes suivantes :
émission du rayonnement électromagnétique pulsé (7a) sur une première zone d'une couche du matériau de construction (3a) ; et
émission du rayonnement électromagnétique continu (7a) sur une deuxième zone de la couche du matériau de construction (3a).

3. Procédé selon la revendication 1 ou 2, selon lequel le rayonnement électromagnétique pulsé (7a) est un rayonnement laser pulsé.

4. Procédé selon l'une des revendications précédentes, selon lequel le rayonnement électromagnétique continu (7a) est un rayonnement laser continu.

5. Procédé selon l'une des revendications 2 à 4, selon lequel la première zone et la deuxième zone de la couche se chevauchent au moins partiellement.

6. Procédé selon l'une des revendications 1 à 5, selon lequel la fréquence d'impulsion du rayonnement pulsé est comprise entre environ 60 et environ 450 kHz et de préférence entre environ 60 et environ 300 kHz.

7. Procédé selon l'une des revendications précédentes, selon lequel entre l'émission du rayonnement électromagnétique pulsé (7a) sur le matériau de construction (3a) et l'émission du rayonnement électromagnétique continu (7a) est prévue une durée au cours de laquelle le matériau de construction (3a) irradié avec le rayonnement électromagnétique pulsé (7a) durcit.

8. Procédé selon l'une des revendications 1 à 7, selon lequel un changement entre le rayonnement pulsé et le rayonnement continu est effectué localement et/ou dans le temps à l'intérieur d'une couche.

9. Procédé de frittage au laser ou de fusion au laser en tant que procédé selon l'une des revendications précédentes.

10. Procédé selon l'une des revendications 1 à 9, selon lequel une poudre est utilisée, laquelle présente une granulométrie entre environ 1 nm et environ 100 nm.

11. Procédé selon l'une des revendications 1 à 10, selon lequel l'épaisseur de la couche dans laquelle est appliquée la poudre est comprise entre environ 1 µm et environ 100 µm.

12. Procédé selon l'une des revendications 1 à 11, selon lequel le diamètre du rayon est compris entre environ 1 µm et environ 20 µm.

13. Procédé selon l'une des revendications 1 à 12, selon lequel le rayonnement laser pulsé et le rayonnement laser continu sont générés par un laser continu unique (7) qui peut émettre aussi bien un rayonnement laser pulsé (7a) qu'un rayonnement laser continu (7a), le rayonnement laser pulsé (7a) étant généré par activation et désactivation d'une puissance de pompe du laser (7) ou par combinaison du laser (7) avec un modulateur.

14. Procédé de fabrication d'un objet tridimensionnel (3) selon un procédé au cours duquel l'objet (3) est produit par durcissement successif de couches individuelles en un matériau de construction (3a) liquide ou poudreux, solidifiable sous l'effet d'un rayonnement électromagnétique, **caractérisé par** une unité de commande (11) qui exécute les étapes du procédé selon l'une des revendications précédentes.

15. Dispositif selon la revendication 14, lequel présente comme source de rayonnement (7) un laser unique (7) qui peut émettre aussi bien un rayonnement laser pulsé (7a) qu'un rayonnement laser continu (7a).

16. Dispositif selon la revendication 14, lequel présente comme source de rayonnement (7) un premier laser qui émet un rayonnement laser pulsé et un deuxième laser qui émet un rayonnement laser continu.
